Europäisches Patentamt

European Patent Office

Office européen des brevets

(19)

(11) Veröffentlichungsnummer: **0 126 435**
**A1**

(12) **EUROPÄISCHE PATENTANMELDUNG**

(21) Anmeldenummer: **84105597.3**

(22) Anmeldetag: **17.05.84**

(51) Int. Cl.³: **B 60 D 1/14,** B 62 D 55/06

(30) Priorität: **20.05.83 IT 2192383 U**

(43) Veröffentlichungstag der Anmeldung: **28.11.84**
**Patentblatt 84/48**

(84) Benannte Vertragsstaaten: **AT CH DE FR LI SE**

(71) Anmelder: **Prinoth, Erich, Via Purger 35, Ortisei (Bozen) (IT)**

(72) Erfinder: **Prinoth, Erich, Via Purger 35, Ortisei (Bozen) (IT)**

(74) Vertreter: **Mayer, Hans Benno, Via dell'Orso 7/A, I-20121 Milano (IT)**

(54) **Vorrichtung zum Verbinden zweier Fahrzeug.**

(57) Vorrichtung zum Verbinden zweier Fahrzeuge (1, 10), besonders zweier Raupenfahrzeuge, bestehend aus zwei sich kreuzenden Verbindungsbändern (7, 8), die am Kreuzungspunkt (14) durch parallel angeordnete Führungsplatten (16, 17) frei verschiebbar verbunden sind.

EP 0 126 435 A1

0126435

Akte Nr. 03-203

Erich Prinoth

Ortisei (Italien)

"Vorrichtung zum Verbinden zweier Fahrzeuge"

Die vorstehende Erfindung betrifft eine Vorrichtung zum Verbinden zweier Fahrzeuge, hauptsaechlich von zwei Raupenfahrzeugen, von denen jedes einen eigenen Antrieb aufweist.

Um mit derartigen Fahrzeugen eine Kurve durchfahren zu koennen, ist es bekannt, die Antriebseinrichtungen, fuer die rechte Raupe bzw. fuer die linken Raupe anzutreiben. Zu diesem Zweck sind zahlreiche Steuereinrichtungen bekannt geworden, die sich im wesentlichen als tauglich und funkionstuechtig fuer Einzelfahrzeuge erwiesen haben. Sollen hingegen zwei Raupenfahrzeuge, z.B. zwei Schneefahrzeuge, bestehend aus einer Zugmaschine und einem Anhaenger zusammengekoppelt werden, so ist es bis heute erforderlich, ein sehr aufwaendiges Steuersystem vorzusehen um zu ermoeglichen, auf die hydraulischen Antriebsvorrichtungen der Raupen des vorderen Fahrzeuges, sowie der Raupen des hinteren Fahrzeuges einzuwirken.

Eine derartige Vorrichtung ist bereits in der frueheren italienischen Patentanmeldung 22168 A/81 des Anmelders beschrieben worden.

Neben einer Stuerung des Rapenantriebes ist es auch notwendig, die Rueckseite der Zugmaschinen mit der Vorderseite des Anhaengers mechanisch zu verbinden. Dabei ist zu beruecksichtigen, dass z.B. Schneefahrzeuge, sowohl waehrend der Geradeausfahrt als auch bei Durchfahren einer Kurve Strecken zu durchfahren haben, die in ihrer Form- und Bodenbeschaffenheit sehr unterschiedlich sind. Dies bringt ein gegenseitiges Neigen der Fahrzeuge mit sich und fuehrt zu Verbindungen zwischen den Fahrzeugen in Richtung der Laengsachse derselben. Ferner ist es erforderlich, dass bei Durchfahren einer Kurve die Moeglichkeit besteht, dass sich die beiden Fahrzeuge in einer dafuer notwendigen gegenseitigen Winkelstellung ausrichten.

Zu diesem Zweck ist es bekannt, das Zugfahrzeug ueblicherweise mit dem Anhaenger ueber verhaeltnismaessig lange Deichseln zu verbinden. Diese Deichseln haben einen recht aufwendigen mechanischen Aufbau um zu ermoeglichen, dass die beiden Fahrzeuge unterschiedliche Stellungen und Winkellagen zueinander einnehmen koennen. Die bekannten Verbindungsdeichseln haben somit den Nachteil, dass sie nicht nur kostenaufwendig sind, sondern aufgrund ihres komplexen mechnischen Aufbaues sind die Deichseln auch anfaellig gegen Stoerungen, es sei hier beruecksichtigt, welchen Fahrbedingungen die Fahrzeuge z.B. im Hochgebirge ausgesetzt sind. Weiterhin, durch die Notwendigkeit verhaeltnismaessig lange Deichseln vorsehen zu muessen, weisen zwei

0126435

zusammengekuppelte Fahrzeuge dieser Art erhebliche Laengenabmessungen auf. Diese Tatsache vermindert wesentlich die Manoevrierfaehigkeit ausserhalb befestigter Strassen oder ebener Flaechen, wodurch der Einsatz der bekannten Fahrzeuge im Hochgebirge schwierig wird, da bekanntlich in Gebirgsgegenden haeufig enge Kurvenstrecken und bewaldete Flaechen zu befahren sind.

Es ist Aufgabe der vorstehenden Erfindung, die Nachteile des Standes der Technik zu vermeiden und eine Verbindungsvorrichtung hauptsaechlich fuer Raupenfahrzeuge, insbesondere fuer Schneefahrzeuge vorzuschlagen, die einen billigen und funktionstuechtigen Aufbau aufweist und die es ermoeglicht, den Raum zwischen den zu verbindenden Fahrzeugen auf ein Minimum zu reduzieren und die es ferner ermoeglicht, eine feste mechanische Verbindung zwischen den beiden Fahrzeugen herzustellen, ohne dabei in unguenstiger Weise die Moeglichkeit einer gegenseitigen freien Lageeinstellung zwischen der Zugmaschine und dem Anhaenger zu beeinflussen.

Die erfindungsgemaesse Aufgabe wird dadurch geloest, dass auf der Rueckseite der Zugmaschine Verbindungslager mit vertikal angeordneten Schwenkzapfen vorgesehen sind, die die Enden von zwei sich kreuzenden, blattfederartig ausgebildeten Verbindungsbaendern aufnehmen und, dass die anderen Enden dieser Baender mit Schwenkzapfen verbunden sind, die Bestandteil von Verbindungslagern sind, die mit dem vorderen Ende des Anhaengerfahrzeuges verbunden sind und, dass die Baender in ihrem Kreuzungspunkt ueber Fuehrungs- und Gleitplatten zusammengehalten werden.

Weitere Vorteile der Erfindung koennen der nun folgenden Beschreibung, den Unteranspruechen und den beigefuegten Zeichnung entnommen werden.

Der Erfingungsgegenstand wird nun genauer beschrieben und anhand eines Ausfuehrungsbeispieles in den beigefuegten Zeichnungen dargestellt.

Es zeigen:

Fig. 1 eine Draufsicht der Verbindungsvorrichtung, waehrend des Durchfahrens einer geraden Strecke und waehrend des Durchfahrens einer Kurve;

Fig. 2 schematisch die erfindungsgemaesse Vorrichtung in Ansicht gemaess Pfeil II-II der Fig. 1.

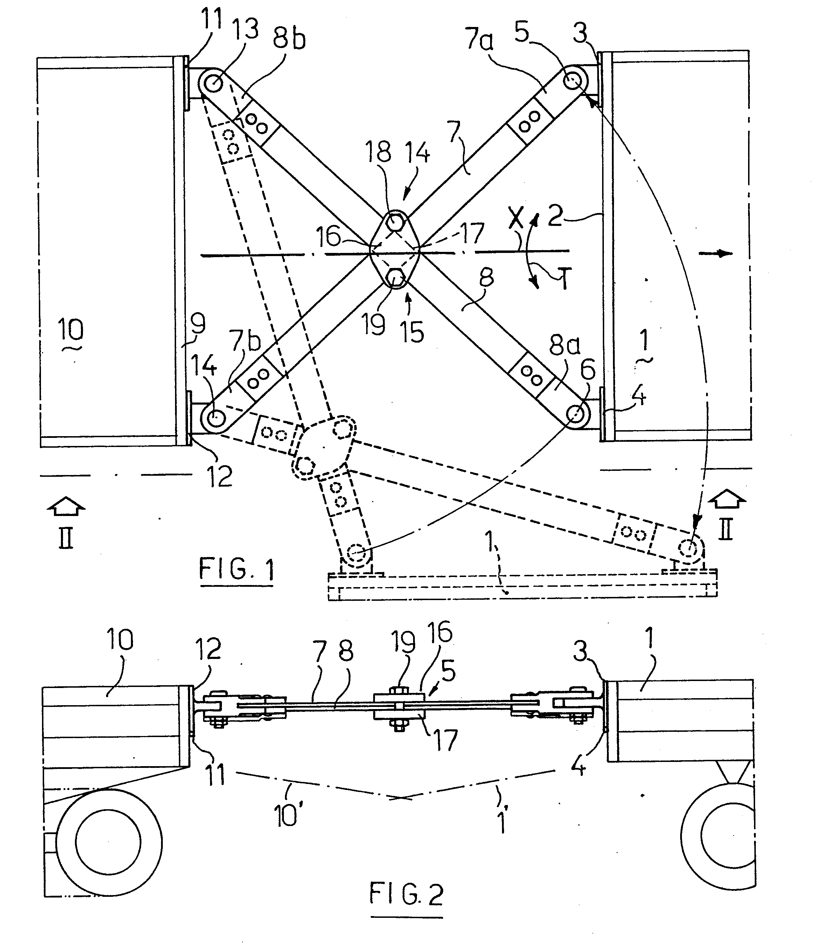

Wie der Fig. 1 zu entnehmen ist, weist die Zugmaschine 1 an ihrer Hinterkante 2 Verbindungslager 3 und 4 auf, die einen entsprechenden vertikal angeordneten Lagerzapfen 5 und 6 aufweisen der schwenkbar das entsprechende Ende 7a bzw. 8a von zwei blattfederartigen Baendern 7 und 8 aufnimmt. Die beiden Baender sind ueberkreuzt angeordnet.

Auch an der Vorderkante 9 des Anhaengerfahrzeuges 10 sind Lager 11 und 12 befestigt, die vertikal angeordnete Lagerzapfen 13 und 14 aufweisen, mit denen verschwenkbar die Ende 7b und 8b der ueberkreuzt angeordneten Baender 7, 8 verbunden sind.

0126435

Im Kreuzungspunkt 14 sind die Baender 7 und 8, die in vorteilhafter Weise aus Federbandstahl oder anderem hochelastischen Stahl hergestellt sind, unter Zuhilfenahme einer Gleitvorrichtung 15 zusammengehalten. Die Fuehrungs- und Gleitvorrichtung 15 besteht im wesentlichen aus zwei uebereinander angeordneten Platten 16 und 17, die an der Aussenseite, die Baender 7, 8 umgreifend durch Schrauben 18 und 19 miteinander verbunden sind. Die Fuehrungsvorrichtung 15 ist in vorteilhafter Weise aus einem Material hergestellt, das gute Gleiteigenschaften besitzt.

Mit dieser aeusserst einfachen Vorrichtung zum Verbinden zweier Raupenfahrzeuge wird eine ueberraschende Funktionstuechtigkeit und Sicherheit erreicht und, obwohl das Fahrzeug 1 mit dem Fahrzeug 10 mit geringstem gegenseitigen Abstand verbunden ist, wird es ermoeglicht, dass sich die Zugmaschine 1 unter einem Lenkwinkel von 90° und mehr gegenueber dem Anhaenger 10 anstellt, wodurch die Moeglichkeit gegeben ist, auch sehr enge Kurven zu durchfahren. In diesem Falle wird durch die Gleit- und Fuehrungsvorrichtung 15, die die Zugmaschine 1 fest mit dem Anhaenger 10 verbunden haelt, in keinster Weise die freie Beweglichkeit zwischen den Federstahlbaendern 7 und 8 behindert. Selbstverstaendlich koennen sich die Fahrzeuge auch in spiegelbildlich entgegengesetzter Lage, zu der mit Strichpunktlinie in der Fig. 1 dargestellten Stellung, gegeneinander anstellen. Es wird dadurch die Moeglichkeit geschaffen, sowohl Rechtskurven als auch Linkskurven zu durchfahren.

Ferner, aufgrund der Elastizitaet des Materials, das fuer die Herstellung der blattfederartigen Baender 7 und 8 Verwendung findet, besteht die Moeglichkeit, dass das Fahrzeug 1 gegenueber dem Anhaengerfahrzeug 10 auch Torsionsbewegung (durch den Pfeil T dargestellt) um die Laengsachse X durchfuehrt. Auch in dieser sonst kritischen Situation, wenn die Fahrzeuge 1 und 10 zueinander unterschiedlichen geneigten Gelaendeebenen durchfahren, wird eine feste, sichere mechanische Verbindung zwischen den Fahrzeugen aufrechterhalten.

Der Fig. 2 koennen weitere Einzelheiten der Lager 3, 4, 11 und 12, sowie der Gleit- und Fuehrungsvorrichtung 15 entnommen werden.

Die Gleit- und Fuehrungsvorrichtung 15 besteht aus zwei Platten 16 und 17, die als Verbindungsvorrichtung fuer die sich kreuzenden Baender 7 und 8 dienen. Die Platten 16, 17 sind mittels Schraubverbindungen 18 und 19 verbunden. Dank der Verwendung elastischer Materialien fuer die Herstellung der Verbindungsbaender 7 und 8, sind auch Neigungen zwischen den zwei Fahrzeugen 1 und 10 moeglich, die schematisch mit Strichpunktlinien durch angedeutete Achsen 10' und 1' dargestellt sind. Diese gegenseitige Neigung zwischen den Fahrzeugen 1 und 10 wird durch die elastische Verformung der Verbindungsbaender 7 und 8 ermoeglicht.

0126435

Patentansprueche

1. Verbindungsvorrichtung zwischen zwei Fahrzeugen, hauptsaechlich zwischen zwei mit Raupen versehene Schneefahrzeugen, **dadurch gekennzeichnet**, dass auf der Rueckseite (2) der Zugmaschine (1) Verbindungslager (3, 4) vorgesehen sind, die vertikal angeordnete Schwenkzapfen (5, 6) aufweisen, die die Enden (7a, 8a) von zwei sich kreuzenden, blattfederartig ausgebileten Verbindungsbaender(7, 8) aufnehmen, dass diese Verbindungsbaender (7, 8) mit ihren anderen Enden (8b, 7b) mit den Schwenkzapfen (13, 14) weiterer Haltelager (11, 12) verbunden sind, die an dem vorderen Ende (9) des Anhaengerfahrzeuges (10) befestigt sind und, dass die Verbindungsbaender (7, 8) in ihrem Kreuzungspunkt (14) ueber eine Gleit- und Verbindungsvorrichtung (15, 16, 17, 18, 19) zusammengehalten sind.

2. Verbindungsvorrichtung, nach Patentanspruch 1, **dadurch gekennzeichnet**, dass die Verbindungsbaender (7, 8) nach Art einer Blattfeder, aus hochelastischem Stahlband hergestellt sind.

3. Verbindungsvorrichtung, nach Patentanspruch 1, **dadurch gekennzeichnet**, dass die Gleit- und Fuehrungsvorrichtung (15, 16, 17, 18, 19) im Kreuzungspunkt (14) der Verbindungsbaender ((7, 8) aus Material mit guten Gleiteigenschaften hergestellt ist.

FIG. 1

FIG. 2

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 913 256 (SHARPE) <br> * Spalte 2, Zeile 53 - Spalte 3, Zeile 8; Figuren 1-3,8-10 * | 1 | B 60 D 1/14 <br> B 62 D 55/06 |
| A | DE-A-3 134 301 (M.A.N.) <br> * Seite 8, Absatz 1 - Seite 9, Absatz 5; Figuren 1-5 * | 1 | |
| A | GB-A- 173 575 (CAMP) <br> * Insgesamt * | 1 | |
| A | US-A-1 758 951 (JOHNSON) <br> * Seite 1, Zeile 74 - Seite 2, Zeile 3; Figuren 1-3 * | 1 | |
| A | FR-A-2 445 775 (FEUVRAY) <br> * Seite 3, Zeile 22 - Seite 4, Zeile 28; Seite 6, Zeile 16 - Seite 7, Zeile 6; Figuren 1,2,4-6 * | 1 | RECHERCHIERTE SACHGEBIETE (Int. Cl. ³) <br><br> B 60 D <br> B 62 D |
| A | US-A-2 171 846 (DAVIDSON) <br> * Seite 2, linke Spalte, Zeile 72 - rechte Spalte, Zeile 20; Figuren 1,2,6,7 * | 1 | |
| A | DE-C- 424 572 (RHEINWERK KÖLN-POLL) <br> * Seite 3, Zeilen 16-23; Figur 1 * | 2 | |

--- -/-

Der vorliegende Recherchenbericht wurde für alle Patentansprüche erstellt.

| Recherchenort <br> DEN HAAG | Abschlußdatum der Recherche <br> 22-08-1984 | Prüfer <br> ESPEEL R.P. |
|---|---|---|

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P | DE-A-3 150 024 (WINTERHOFF) * Insgesamt * | 1 | |
| A | DE-C- 958 619 (KÄSSBOHRER) | | |
| A | FR-A- 788 790 (ALLIED MACHINERY) | | |
| A | US-A-3 860 266 (FRANK) | | |
| A | US-A-2 792 238 (SCHAA) | | |
| A | US-A-2 112 559 (DAVIDSON) | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 22-08-1984 | Prüfer ESPEEL R.P. |
|---|---|---|

EPA Form 1503. 03.82